# EUROPEAN PATENT SPECIFICATION

(11) **EP 0 723 562 B1**
(45) Date of publication and mention of the grant of the patent: **08.07.1998**
(21) Application number: 94928887.2
(22) Date of filing: 07.10.1994
(51) Int. Cl.: C08G 63/80, C08J 3/12

(54) **SOLID STATE POLYMERISATION OF POLYESTERS PREPOLYMER PELLETS WITH LOW DIFFUSION RESISTANCE**
FESTPHASENPOLYKONDENSATION VON POLYESTER-PREPOLYMER-PELLETS MIT NIEDRIGEM DIFFUSIONSWIEDERSTAND
POLYMERISATION A L'ETAT SOLIDE DE POLYESTERS SOUS FORME DE GRANULES DE PREPOLYMERE AYANT UNE FAIBLE RESISTANCE DE DIFFUSION

(30) Priority: 15.10.1993 US 137876
(43) Date of publication of application: 31.07.1996
(73) Proprietor: SHELL INTERNATIONALE RESEARCH MAATSCHAPPIJ B.V., 2596 HR Den Haag (NL)
(72) Inventor: DUH, Ben, Talmadge, OH 44278 (US); TUNG, William, Chung, Tsing, Talmadge, OH 44278 (US)
(86) International application number: PCT/EP94/03341
(87) International publication number: WO 95/10557

(56) References cited:
- WO-A-92/02569

## Description

This invention relates to solid state polymerisation of low diffusion resistance pellets of polyester prepolymers. High molecular weight polyesters, such as poly(ethylene

terephthalate) (PET) and poly(ethylene naphthalate) (PEN), are usually produced by a combination of melt polymerisation and solid state polymerisation (SSP) processes. Polyester prepolymers with relatively low molecular weight (evidenced by a relatively low intrinsic viscosity, "I.V.") are produced in a melt polymerisation process. The prepolymer melt is typically extruded through a die with multiple orifices to form molten strands that are quenched, solidified, and chopped into granules or pellets. There are, of course, other methods to convert polyester melt into granular form. The prepolymer granules or pellets are further polymerised in solid phase to a desired high molecular weight or I.V., at temperatures below the melting point but above the glass transition temperature.

Hereafter, for convenience, polyester prepolymer granules, regardless of their shape or method of forming, will be referred to as pellets.

Generally, the shape of the orifices in the extrusion die used to pelletize prepolymer is round, but orifices of other simple shapes can be used; in all cases conventional extrusion dies give solid shaped strands or fibres. Drooping of the molten prepolymer strands and/or some flattening actions of the pelletizing equipment, cause the cross-section of the resulting prepolymer pellets to be somewhat elongated and not exactly round; i.e., approximately elliptical.

Solid state polymerisation (SSP) is conducted under vacuum or in a stream of purge gas such as nitrogen. Overall, SSP involves two major steps: (1) chemical reactions and (2) diffusion of reaction by-products. The chemical reactions are transesterification and esterification.

Transesterification generates ethylene glycol (EG) as the by-product and esterification generates water as the by-product. To force the polyester prepolymer to polymerize further, reaction by-products must be effectively removed as they are generated. By-products generated by the reaction diffuse from the interior to the surfaces of the pellets where they are removed by vacuum or an inert gas stream. Since resistance to by-product diffusion from the surfaces of the pellets to the bulk of the gas phase is negligible, only the chemical reaction rates and by-product diffusion from the interior to the surfaces of the pellets are major factors in polymerisation performance.

Enhanced chemical reaction rates are achieved by using the maximum allowable reaction temperature, slightly below the temperature at which polymer pellets start to stick together or to the reactor wall.

Resistance to diffusion of by-products can be reduced by reducing prepolymer particle size. However, at a fixed temperature, smaller particles have higher tendencies to stick. Therefore, lower reaction temperatures are required if particle size is reduced. Moreover, excessively small particles are hard to handle. Therefore, it is no accident that most of the polyester pellets weigh between 0.015 to 0.03 grams per pellet. Another way to reduce the by-product diffusional resistance while maintaining the pellet size is to shape the pellet cross-section like stars, crosses, dog bones and the like. A typical dog bone shaped shape prepolymer is exemplified by EP 0 541,674 A1. However, such shapes are generally undesirable because the increased inter-pellet contact area of these shapes increases the tendency to stick. Therefore, practically all standard prepolymer pellets have round, elliptical, square, rectangular or other simple cross-sections.

Heretofore, a number of methods have been proposed to reduce diffusional resistance to by-products while maintaining a suitable prepolymer particle size and without increasing polymer sticking tendency. U.S. Patent Specification No. 3,586,647 proposes foamed pellets which are formed by incorporating nitrogen or a foaming agent into the prepolymer melt before pelletizing. Foamed pellets polymerize only slightly faster than solid pellets. In U.S. Patent Specification No. 4,755,587, it is proposed to use porous pellets with interconnected voids prepared by grinding and compacting the polyester prepolymer. In U.S. Patent Specification No. 4,849,497, it is proposed to melt spin polyester prepolymer into fine fibres, and then cut and compact the fine fibres into porous pills for solid state polymerisation.

WO-A-92/02569 discloses a "bore" like configuration for a polymer having good reactivity for solid-state polymerisation by reduced path length for volatiles to travel to the exterior of the pellet, and reduced contact area in a packet condition.

Although porous pellets solid state polymerize much faster than standard pellets, the formation of porous pellets requires expensive additional steps, such as grinding, compacting, granulating, and classifying. Moreover, porous pellets tend to generate large amounts of fines.

It is the purpose of this invention according to claims 1-10 to improve the polymerisation process by providing an improved polyester prepolymer pellet form that offers reduced diffusion resistance to the reaction by-products and, therefore, higher polymerisation rates, without the disadvantages of existing techniques.

The present invention provides a polyester prepolymer pellet having improved gas diffusion characteristics that can be solid state polymerised into a high molecular weight polyester which comprises a polyester prepolymer formed into a substantially "C" shaped or tubular open-ended pellet.

The present invention enables the solid state polymerisation of polyester prepolymers that are shaped in a manner to provide one or more open-ended cavities inside each shaped particle. The "C" shape or tubular open-ended shape, size and capability effectively to reduce gas diffusion resistance results in greatly improved solid state polymerisation rates that provide a number of advantages in both newly designed polymerisation plants as well as in existing plants.

The invention is applicable to virtually any polyester that can be solid state polymerised. The most common polyesters suitable for use in the invention have at least about 75 mole percent of their acid moieties provided by an aromatic dicarboxylic acid, such as terephthalic acid, isophthalic acid, or a naphthalenic dicarboxylic acid (preferably 2,6-) with the diol moieties provided by glycols such as ethylene glycol, butylene glycol and 1,4-dimethylol cyclohexane or aromatic diols such as hydroquinone and catechol. Such polyesters can contain other dicarboxylic acids such as adipic acid, isophthalic acid, and sebacic acid. Poly(ethylene terephthalate) (PET), poly(ethylene isophthalate), poly(ethylene naphthalate) (PEN), and poly(butylene terephthalate) homopolymers are representative examples of such polyesters. Poly(ethylene naphthalate)s are especially suitable. Blends of various polyesters can also be polymerised by the process.

The diacid component in the polyesters is normally comprised of alkyl dicarboxylic acids which contain from 4 to 36 carbon atoms, diesters of alkyl dicarboxylic acids which contain from 6 to 38 carbon atoms, aryl dicarboxylic acids which contain from 8 to 20 carbon atoms, diesters of aryl dicarboxylic acids which contain from 10 to 22 carbon atoms, alkyl substituted aryl dicarboxylic acids which contain from 9 to 22 carbon atoms, or diesters of alkyl substituted aryl dicarboxylic acids which contain from 11 to 22 carbon atoms.

The preferred alkyl dicarboxylic acids will contain from 4 to 12 carbon atoms. Some representative examples of such alkyl dicarboxylic acids include glutaric acid, adipic acid, and pimelic acid. The preferred diesters of alkyl dicarboxylic acids will contain from 6 to 12 carbon atoms. A representative example of such a diester of an alkyl dicarboxylic acid is dimethyl azelate. The preferred aryl dicarboxylic acids contain from 8 to 16 carbon atoms. Some representative examples of aryl dicarboxylic acids are terephthalic acid, isophthalic acid, and orthophthalic acid. The preferred diesters of aryl dicarboxylic acids contain from 10 to 18 carbon atoms. Some representative examples of diesters of aryl dicarboxylic acids include dimethyl terephthalate, dimethyl isophthalate, dimethyl orthophthalate, dimethyl naphthalate, and diethyl naphthalate. The preferred alkyl substituted aryl dicarboxylic acids contain from 9 to 16 carbon atoms and the preferred diesters of alkyl substituted aryl dicarboxylic acids contain from 11 to 15 carbon atoms.

The diol component of the polyester prepolymers is normally comprised of glycols containing from 2 to 12 carbon atoms, glycol ethers containing from 1 to 12 carbon atoms, glycol ethers containing from 4 to 12 carbon atoms, and polyether glycols having the structural formula

HO-(A-O)ₙ-H

wherein A is an alkylene group containing from 2 to 6 carbon atoms and wherein n is an integer from 2 to 400.

Branched polyester prepolymers can also be used. Such branched polyesters normally contain branching agents that have three or more functional groups; preferably three or four. Reactive functional groups can be carboxyl or aliphatic hydroxyl groups and can optionally contain both carboxyl groups and hydroxyl groups. Examples of acidic branching agents include trimesic acid, trimellitic acid, pyromellitic acid, butane tetracarboxylic acid, naphthalene tricarboxylic acids, and cyclohexane-1,3,5-tricarboxylic acids. Representative examples of hydroxyl branching agents (polyols) include glycerin, trimethylol propane, pentaerythritol, dipentaerythritol, 1,2,6-hexane triol, and 1,3,5-trimethylol benzene. Generally, in the range of from 0 to 3 percent (based upon the total diol component) of a polyol containing from 3 to 12 carbon atoms will be used.

High strength polyesters that utilize at least one bis-hydroxyalkyl pyromellitic diimide in their diol component, such as those described in United States Patent Specification No. 4,605,728 can also be used.

The polyester prepolymers (starting polyesters) may be made by any suitable method but are typically prepared by conventional melt polymerisation techniques using temperatures, catalysts, and stabilizers well known in the polyester art. These polyester prepolymers have a relatively low initial starting I.V.. Prepolymers should preferably have a starting I.V. (as measured in a 60:40 by weight phenyl:1,1,2,2-tetrachloroethane solvent system at a temperature of 30°C) in the range of from 0.25 dl/g to 0.75 dl/g. It is desirable to be able to use prepolymer with as low an I.V. as is technically possible and suitably an I.V. below 0.6 dl/g, desirably below 0.5 dl/g. An I.V. of less than 0.25 dl/g, however, may be unsuitable because 0.25 dl/g has been found to be about the lower limit that PET can be pelletized without shattering.

In the pratice of this invention, the prepolymer is formed into substantially "C" shaped or tubular shaped open ended pellets with one or more open-ends prior to solid state polymerisation. Each of the pellets has one or more open-ends but retains the same general outer cross-sectional shape as standard solid pellets. Pellets will normally weigh in the range of from 0.1 grams to 10 grams per 100 pellets. Pellets weighing in the range of from 1 to 3 grams per 100 pellets are commonly used commercially and are preferred.

An "open-ended" pellet is a pellet with at least one end or side open to allow carrier gas to enter the interior of the pellet. It may be open on both ends and may, or may not, be open to the side. Thus either or both ends of the tubular pellet may be open and/or the side may be open; in any of these cases the pellet should be understood to be "open-ended".

The term "substantially tubular" is used to indicate that a strand or pellet is in the form of a long hollow body with a generally annular or ring-shaped cross-section. This annular cross-section may be complete called O- shaped in the case of strand or pellet having no opening to the side or incomplete in the case of strand or pellet having a side opening called C- shaped.

Preferably the prepolymer is extruded in tubular form; after quenching and chopping, the resulting substantially tubular pellets have a hollow portion, with open ends, extending through the pellet, preferably through the entire length of the pellet. As conventional dies give rise to solid pellets, a die specially designed to form molten substantially tubular strands is required for formation via extrusion.

Thus, suitable pellets can be advantageously formed by extruding the prepolymer through a specially designed die, quenching the extruded strands and chopping the solidified strands into pellets.

The present invention therefore provides a process for the preparation of pellets of the invention which comprises extruding polyester prepolymer through a die designed to form substantially tubular molten strands, quenching the molten strands, and chopping the strands into open-ended pellets of a size and shape suitable for solid state polymerisation.

The pellets formed in this way are usually open at both ends. Pellets with both ends open are preferred. If the pellets are also open to the side, there will be an open gap on the side of the pellet. The pellets will generally be cut into lengths in the range of from 1 mm to 10 mm. If too short, they tend to shatter and form fines and if too long they have a greater tendency to stick. Lengths in the range of from 2 to 3 mm are preferred for pellets in the size range of from 1 to 3 grams per 100 pellets.

All else being equal, the sticking tendencies of polymer pellets during SSP increase with increasing specific inter-pellet contact area, which is defined as the inter-pellet contact area per unit weight of polymer. With similar general cross-sectional shape and length as standard pellets, the open-ended pellets have approximately the same sticking tendency as the standard pellets. The presence of one or more open ends in each pellet greatly shortens the by-product mean diffusion path and increases surface area thereby lowering the overall by-product diffusional resistance within the pellet. Furthermore, the open ends allow the purge gas to flow into or pass through the interior of the pellets to sweep away reaction by-products as soon as they diffuse to the inner surfaces. Therefore, the open-ended polyester prepolymer pellets of the present invention solid state polymerize much faster than e.g. foamed polyester prepolymer pellets with equal void fraction.

The simplest open-ended pellets are those with a "C"-shaped or "O"-shaped cross-section formed by an extrusion-pelletizing technique. These pellets can be produced by discharging the prepolymer melt from the melt reactor through an extrusion die designed to have "C"-shaped orifices, quenching the extruded strands, and chopping the solidified strands with a pelletizer. As the extruded melt strands emerge from the die face, each will have a "C"-shaped cross-section. This allows air to enter the interior of each forming strand. Depending on the design of the die orifices, the polymer properties, and the extrusion conditions, the gaps of the extruded strands may or may not close to form tubes or strands of substantially tubular shape. If the gaps close, pellets with "O"-shaped cross-sections result. Otherwise, pellets with "C"-shaped cross-sections result. In general, if the gap in each die orifice is narrow enough, the polymer I.V. is high enough, and/or the die temperature is low enough, pellets with "O"-shaped cross-sections will be produced. For convenience, pellets with "C"- and "O"-shaped cross-sections are referred herein to as C-pellets and O-pellets respectively. The C-pellet is open to the side but the O-pellet is not. The general shape of the cross-sections of C-pellets and O-pellets are approximately elliptical although the general orifice shape of the die used may be round.

To prevent possible interlocking of C-pellets, and thus polymer sticking tendency, the gap in each C-pellet should ideally be narrower than half the pellet diameter, more preferably narrower than one fifth the pellet diameter. For pellets of a size suitable for SSP, the gap size is preferably in the range of from 0.01 mm to 1.0 mm; good results have been obtained with C-pellets with a gap size of in the range of from 0.1 mm to 0.4 mm.

Prepolymer pellets with multiple open-ended cavities can also be produced using appropriately designed extrusion dies. Since dies that produce pellets with multiple cavities are more difficult to design and fabricate it is generally preferred that the number of cavities in each pellet be limited.

For some applications it may be desirable to use extrusion dies with mandrels or similar devices. A mandrel is a hollow pin inserted in the centre of a die orifice that forms a cavity. Air or nitrogen can be introduced though the centre of the mandrel to fill the centre of the extrudate, thus reducing the possibility of the cavity closing when quenched or in further processing.

Although it is preferable to produce prepolymer pellets with open-ends by simply replacing a standard melt reactor discharging die with a die having "C"-shaped or other desired shaped orifices, it is possible to convert standard pellets with an additional extrusion step.

Although the general cross-sectional shape of the open-ended pellets is preferably round or elliptical, it may be approximately square, rectangular, or of other simple geometrical shape.

For example, various shapes, such as triangles, rounded triangles and squares can be formed by the so-called adhesive profile extrusion techniques disclosed in the book "Polyester Fibres" Chemistry and Technology, by Herman Ludewig, Wiley Publishing, 1964. While this book discusses fibre shapes, hollow strands chopped into pellets may be formed in the same manner.

The present invention further provides the use of the polyester prepolymer pellets of the invention in the preparation of a polyester polymer by solid state polymerisation.

For solid state polymerisation it is usually necessary that the prepolymer be partially crystalline to reduce sticking. Crystallinity should generally be above about 30 percent and more typically above about 40 percent. Since extruded pellets will be substantially amorphous, it is then necessary to process the pellets to increase crystallinity to the desired level. This is generally done by heating. Crystallization is carried out in any suitable equipment in which the polyester granules can be heated to crystallization temperatures without sticking. Agitation normally helps prevent sticking. Crystallization can also be carried out in a fluidized bed crystallizer. Fluidization is accomplished by utilizing a gas flow rate sufficient to cause the pellets to be fluidizing the crystallizer with or without mechanical vibration. Inert gas or air can be used. Since very large quantities are required for fluidization, air is most economical.

Crystallization residence time is generally in the range of from 2 to 20 minutes and preferably from 5 to 10 minutes depending on temperature. In the case of poly(ethylene terephthalate), air at a temperature in the range of from 140°C to 215°C is used for heating. Air temperatures in the range of from 190°C to 200°C are preferred.

Density is a convenient measure of crystallinity and, in general, poly(ethylene terephthalate) prepolymer is suitably crystallized to a density of at least about 1.37 g/cc. A density of at least about 1.38 g/cc is preferred and 1.39 g/cc more preferred.

The polyester granules can also be crystallized in a high frequency energy field of in the range of from 20 megahertz to 300 megahertz as described in greater detail in U.S. Patent Specification No. 4,254,253.

Solid state polymerisation (SSP) of the open-ended, low diffusion resistance pellets is conducted at conditions suitable for polymerisation of standard solid pellets of similar size. Generally SSP is conducted at a temperature in the range of from 10°C to 50°C below the melting point of the prepolymer. For PET a temperature range of from 200°C to 245°C, and preferably from 210°C to 230°C is appropriate. The polymerisation is conducted under vacuum or in a stream of inert gas in a suitable reactor. Appropriate conditions are the same as are suitable for standard pellets or porous pill pellets. Suitable conditions are detailed in U.S. 4,977,196 at column 8, line 45 to column 10, line 62 as well as in numerous other patent specifications including U.S. 4,755,587, U.S. 4,876,326 and U.S. 4,849, 497.

The advantages of the open-ended prepolymer pellets of the invention and other aspects of this invention are demonstrated in the following Examples, with reference to the accompanying drawings in which
Figure 1 is a plot of polymer I.V. against reaction time for the solid state polymerisation of PET pellets with different cross sections;
Figure 2 is a plot of polymer I.V. against reaction time for the solid state polymerisation of PEN standard pellets and pellets with open-ended cavities; and
Figure 3 is a plot of polymer I.V. against reaction time for the solid state polymerisation of PET standard pellets and pellets with open-ended cavities.

In the Examples the abbreviations 'OD' and 'ID' stand for outside diameter and inside diameter respectively,
"I.V." stands for intrinsic viscosity,
"PET" stands for poly(ethylene terephthalate), and
"PEN" stands for poly(ethylene naphthalate).

### Example 1

One standard strand die (Die S) and two "C"-profile dies (Dies A and B) were used to prepare standard pellets and open-ended pellets of PET prepolymer having an I.V. of about 0.59 dl/g and a carboxyl content of 27 meg/kg for solid state polymerisation tests. The standard strand die had a 3/16 inch (4.76 mm) diameter orifice. Each of the two "C"-profile dies has a "C"-shaped orifice. The dimensions of the orifice of each of the two "C"-profile dies is defined by two concentric circles and a gap. The inner circle and the gap make up the "land" area within the orifice. The orifice dimensions of the three dies are as follows:

| Die | OD, in (mm) | | ID, in (mm) | | Gap, in (mm) | |
|---|---|---|---|---|---|---|
| S | 3/16 | (4.76) | ---- | | ---- | |
| A | 1/4 | (6.35) | 1/16 | (1.59) | 1/48 | (0.53) |
| B | 1/4 | (6.35) | 3/32 | (2.38) | 1/32 | (0.79) |

It is not necessary that the two circles that define the orifice of a "C"-profile die be concentric. Both Dies A and B are examples of the simplest designs. The three dies were used in conjunction with a 11/4 inch (31.75 mm) laboratory extruder and a pelletizer to prepare open-ended pellets and standard pellets. Four different types of PET prepolymer pellets, each with different cross-sections, prepared using the three dies were chosen for the solid state polymerisation (SSP) tests. Pellet preparation resulted in practically no change in I.V. or carboxyl content.

Table I lists the characteristics of the pellets and the extrusion conditions used to prepare them. The four types of pellets are designated S-Pellets, O-pellets, Q-Pellets, and C-pellets respectively. S-Pellets were standard solid pellets prepared with Die S; they were used as the control. O-Pellets were pellets with "O"-shaped cross-sections prepared with die A. Q-Pellets and C-Pellets were pellets with "C"-shaped cross-sections prepared with Die B. The main difference between Q-Pellets and C-Pellets was in the dimension of the gap; Q-Pellets had very narrow gaps and "C"-Pellets had wider gaps.

Although the standard strand die used to prepare the S-pellets has a round orifice, the cross-sections of the S-pellets were elongated because the melt strands drooped before quenching. Each of the three types of open-ended pellets were prepared using a "C"-profile die with the land gap of the die orifice oriented upwards. As the melt strands cooled, the gaps in the strand tended to close in the case of the O-pellets or to shrink back in the case of the C- and Q-pellets. These actions had the effect of offsetting the elongation of the cross-section caused by drooping. Therefore, all three types were more nearly round in cross-section than the standard pellets. This is evidenced by their lower axis ratios. This is beneficial because the less elongated the cross-sections, the lower the pellet sticking tendency during solid state polymerisation. All four types of pellets had nearly equal average pellet weight (between 1.82 and 1.84 grams per 100 pellets). Since the standard pellets have more elongated or elliptical cross-sections, they will have a somewhat higher sticking tendency than the three types of pellets with open-ended cavities. If the cross-sections were the same, the sticking tendency would be the same. The four types of PET pellets were solid state polymerised in a small scale static bed reactor at the same SSP temperature to demonstrate the SSP rate advantages of the three types of open-ended pellets over standard pellets.

The static-bed reactor used was made from a 24-inch (609.6 mm) long glass tube with 1-inch (25.4 mm) ID. The bottom of the reactor was connected to a small purge-gas supply tube which coiled up around the reactor. The only purge gas used was nitrogen. The reactor with its purge-gas supply tube was immersed in a thermostated oil bath that heated the reactor and the incoming nitrogen. For each SSP run, 80 grams of PET pellets were used. A stream of nitrogen was passed through the reactor at a rate of 18 standard cubic feet per hour (1.42 x 10⁻⁴ m³/s) at all times during the run. Because of the long length of the purge-gas supply tube immersed in the oil bath, the nitrogen was heated to the oil temperature as it reached the bottom of the reactor.

In each run, the pellets were first crystallized and dried at 180°C for 60 minutes. Then the reactor temperature was raised to 220°C over 10 minutes. The SSP temperature of 220°C was used because it is near the maximum reactor temperature allowable in the continuous commercial-scale SSP operations in the production of high I.V. PET. The SSP step lasted 23 hours. Samples were taken at various intervals for I.V. tests. Table II lists the I.V.'s of the samples taken during the runs.

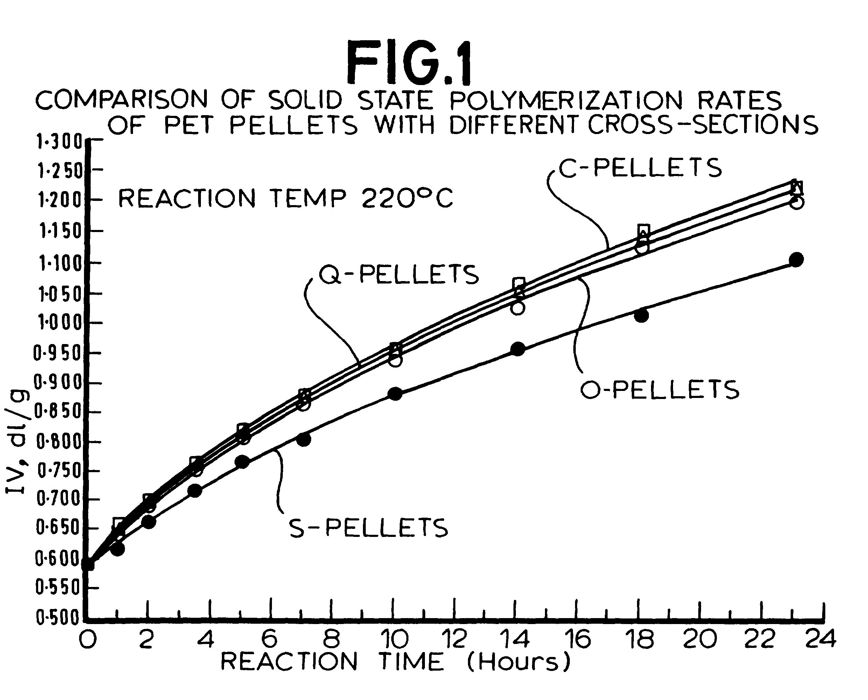

The I.V. data listed in Table II were further plotted against the SSP time in Figure 1 to compare the SSP rates of the four types of pellets. It can be seen from Figure 1 that all the three types of open-ended pellet solid state polymerize much faster than the standard pellets.

C-Pellets, with the largest cavities and open gaps, solid state polymerize fastest: O-Pellets, with the smallest cavities and with no cpen gaps, polymerize more slowly, although not by much.

From Figure 1, the reaction times required for the four types of pellets to achieve two product I.V.'s, 0.84 dl/g and 0.95 dl/g, were determined. These I.V.'s are required for bottle and food tray applications respectively. From these SSP time requirements and the bulk density data, the average SSP rates, the SSP rate ratios, and the productivity advantages over the standard pellets were calculated for the product of 0.84 and 0.95 dl/g I.V. products. The results are listed in Table III.

It can be seen from Table III that, between I.V.'s of 0.59 and 0.84 dl/g, O-Pellets, Q-Pellets, and C-Pellets solid state polymerize faster than the standard pellets by 34.4, 41.3, and 46.2 percent respectively. Since productivity of a continuous SSP process is based on polymer weight per hour, productivity advantages of the open-ended pellets over the standard pellets can be calculated by taking into account the bulk densities of the four types of pellets. They are: 29.3, 31.9, and 30.2 percent respectively for O-Pellets, Q-pellets and C-pellets. It can be seen that the best productivity improvement is realized by replacing the standard pellets with Q-Pellets, which have "C"-shape cross-sections with very narrow open gaps. Thus, Q-pellets appear to have the best combination of SSP rate and bulk density among the three types of open-ended pellets.

**Table I**

| Pellet Characteristics and Extrusion Conditions used to Prepare Them | | | | |
|---|---|---|---|---|
| Pellet Shape | S | O | Q | C |
| Die Used | Standard | A | B | B |
| Barrel temp, °F | 540¹ | 540¹ | 540¹ | 540¹ |
| Die temp, °F | 540¹ | 490² | 490² | 540¹ |
| Screw RPM | 33 | 33 | 33 | 50 |
| Pelletizer Speed Setting | 10 | 10 | 10 | 15 |
| Pellet wt, gm | 0.0182 | 0.0184 | 0.0184 | 0.0182 |
| Bulk density g/cc | 0.793 | 0.763 | 0.740 | 0.706 |
| Pellet length, mm | 3 | 3 | 3 | 3 |
| Major axis, mm | 2.72 | 2.45 | 2.48 | 2.58 |
| Minor axis, mm | 1.87 | 2.24 | 2.35 | 2.36 |
| Axis ratio | 1.45 | 1.09 | 1.06 | 1.09 |
| Pellet cavity diameter, mm | --- | 0.25 | 0.35 | 0.72 |
| Gap in pellet, mm | --- | --- | 0.11 | 0.39 |

| | | | | |
|---|---|---|---|---|
| ¹ 282°C | | | | |
| ² 254°C | | | | |

**Table II**

| I.V.'s of Samples of PET Pellets Taken During Solid State Polymerisation at 220°C | | | | |
|---|---|---|---|---|
| SSP Time, hr | S Pellets | O Pellets | Q Pellets | C Pellets |
| 0 | 0.590 | 0.589 | 0.590 | 0.591 |
| 1 | 0.615 | 0.641 | 0.640 | 0.660 |
| 2 | 0.661 | 0.689 | 0.695 | 0.700 |
| 3.5 | 0.714 | 0.755 | 0.758 | 0.765 |
| 5 | 0.765 | 0.810 | 0.812 | 0.819 |
| 7 | 0.805 | 0.864 | 0.875 | 0.882 |
| 10 | 0.883 | 0.939 | 0.956 | 0.958 |
| 14 | 0.955 | 1.025 | 1.050 | 1.067 |
| 18 | 1.013 | 1.126 | 1.140 | 1.152 |
| 23 | 1.105 | 1.192 | 1.216 | 1.221 |

**Table III**

| Reaction Rate and Productivity Improvements of Open-ended Pellets over Standard Pellets in Continuous Solid State Polymerisation | | | | |
|---|---|---|---|---|
| A. Product I.V. = 0.84 dl/g for bottle applications | | | | |
| Pellet Type | S | O | Q | C |
| SSP time required, hr | 8.2 | 6.1 | 5.8 | 5.6 |
| Avg, SSP rate dl/g/hr | 0.0305 | 0.0410 | 0.0431 | 0.0446 |
| SSP rate ratio | 1.000 | 1.344 | 1.413 | 1.461 |
| % Productivity Advantage | --- | 29.3 | 31.9 | 30.2 |
| | | | | |

| B. Product I.V. = 0.95 dl/g for food tray applications | | | | |
|---|---|---|---|---|
| Pellet Type | S | O | Q | C |
| SSP time required, hrs | 13.8 | 10.2 | 9.7 | 9.4 |
| Avg. SSP rate dl/g/hr | 0.0261 | 0.0353 | 0.0371 | 0.0333 |
| SSP rate ratio | 1.000 | 1.352 | 1.421 | 1.467 |
| % Productivity Advantage | --- | 30.1 | 32.6 | 30.6 |

### Example 2

The standard die and Die B used in Example 1 were used to prepare standard solid pellets and open-ended pellets of poly(ethylene naphthalate) (PEN) for SSP tests. The PEN prepolymer used had an I.V. of about 0.48 dl/g as measured in a 60:40 phenol:tetrachloroethane solvent system at a temperature of 30°C and a carboxyl content of 12 meg/kg. Pellet preparation had little or no effect on I.V. or carboxyl content. The standard pellets obtained had a pellet weight of 1.98 grams per 100 pellets, a major axis of 2.58 mm, a minor axis of 2.00 mm, and a bulk density of 0.78 g/cc. The open-ended pellets prepared with Die B had a pellet weight of 1.97 grams per 100 pellets, an "O"-shaped cross-section with 2.50 mm major axis and 2.38 mm minor axis, an approximate cavity diameter of 0.71 mm, and a bulk density of 0.71 g/cc. Pellet length was 3 mm for both types of pellets.

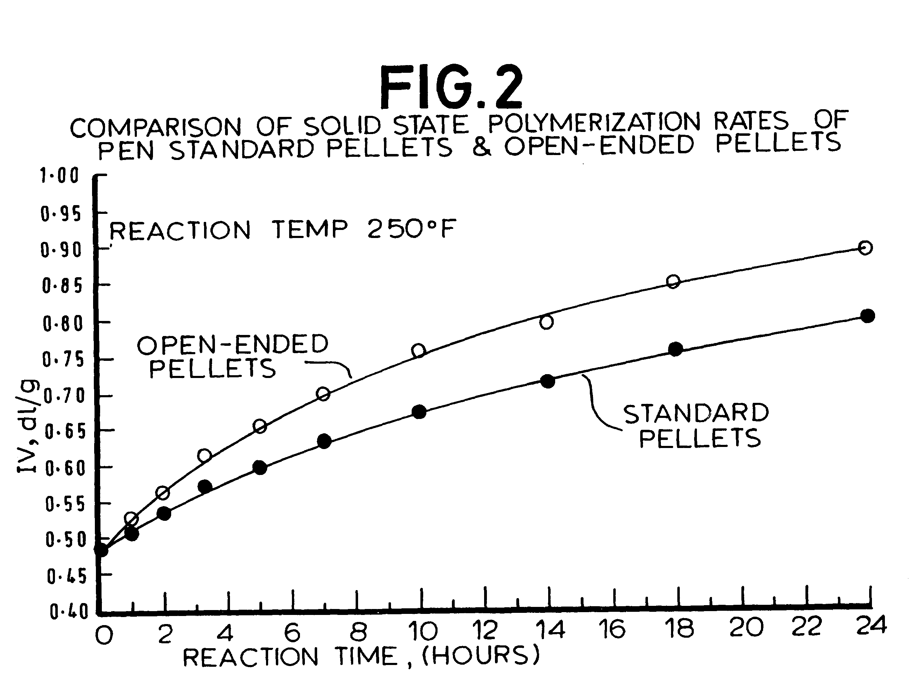

These two types of PEN prepolymer pellets were solid state polymerised in the same small-scale static-bed reactor used in Example 1. Except for an additional devolatilization step, the SSP experimental procedures used in this Example were similar to those used in Example 1. For each run, the PEN pellets were first devolatilized at 120°C for 4 hours. Then the PEN pellets were crystallized and dried at 200°C for 1 hour. Then the bed temperature was raised to 250°C to effect SSP which lasted 24 hours. At all times throughout the run, the polymer bed was purged with a stream of nitrogen. Table IV lists the I.V.'s of the samples taken during the SSP runs with the PEN standard pellets and the open-ended pellets. The I.V. data in Table IV were also plotted in Figure 2 to compare the SSP rates of these two types of PEN pellets.

**Table IV**

| I.V.'s of Samples Taken During Solid State Polymerisation of PEN Standard Pellets and Open-ended Pellets | | |
|---|---|---|
| SSP Time, hr | Standard Pellets (S-Pellets) | Open-ended Pellets (O-Pellets) |
| 0 | 0.4830 | 0.4830 |
| 1 | 0.506 | 0.526 |
| 2 | 0.534 | 0.562 |
| 3.3 | 0.570 | 0.613 |
| 5 | 0.595 | 0.653 |
| 7 | 0.631 | 0.696 |
| 10 | 0.670 | 0.755 |
| 14 | 0.711 | 0.792 |
| 18 | 0.754 | 0.845 |
| 24 | 0.795 | 0.887 |

Two major applications of high I.V. PEN are packaging and industrial fibre. Packaging applications require an I.V. of about 0.65 dl/g, and industrial applications about 0.75 dl/g. From Figure 2, the standard pellets (S-pellets) required 8.3 and 18.0 hours, whereas the open-ended pellets (O-Pellets) required 4.9 and 10.1 hours respectively to achieve these I.V.'s. thus the open-ended pellets solid state polymerised faster than the standard pellets by 69 percent between 0.48 and 0.65 dl/g, and by 78 percent between 0.48 and 0.75 dl/g. Taking into account the lower bulk density of the open-ended pellets productivity gains of 54 and 62 percent respectively can be achieved by replacing the standard pellets with the open-ended pellets in the production of PEN resins for packaging and industrial fibre applications.

Compared with Example 1, it can be seen that even greater productivity gains can be realized with PEN than with PET by the use of the prepolymer pellets of this invention. This is because PEN has a lower vapour permeability or higher vapour barrier properties than PET.

### Example 3

A series of modified PET prepolymers with I.V.'s ranging from 0.40 to 0.55 dl/g were produced in a 200-lb (90.72 kg) capacity pilot plant. This modified PET was a copolyester composed of 98 mole % ethylene terephthalate and 2 mole % ethylene isophthalate repeating units and produced by reacting ethylene glycol with 98 mole % terephthalic acid and 2 mole % isophthalic acid using a melt polymerisation process commonly known to those experienced in the art of polyester manufacturing. This composition is widely used for polyester bottle resin. The I.V.'s of these copolyester batches were controlled by varying the polycondensation cycle time which is defined as the duration between the time the batch pressure is reduced to full vacuum (below 1 mm Hg - 1.33 x 10² Pa) and the time the polymerisation is terminated. A fixed polycondensation temperature of 282°C was used for the production of the prepolymers.

Two types of pellets, namely solid pellets and O-pellets, were produced by discharging the polymer melt, after the completion of the batch, through a standard extrusion die and a "C"-profile extrusion die, respectively, and quenching and pelletizing the extruded strands. The standard die had 15 round orifices each with a diameter of 6 mm. The "C"-profile extrusion die had 15 "C"-shaped orifices each with an OD of 5.1 mm, an ID of 2.25 mm, and a gap of 0.397 mm as defined in Example 1.

Pellet samples from selected prepolymers produced in the pilot plant were solid state polymerised in a small-scale static-bed reactor at 220°C for 16 hours using the procedure described in Example 1. The solid state polymerisation rates and the acetaldehyde contents before and after solid state polymerisation of three of the selected prepolymers are compared here to demonstrate another important advantage of O-pellets over solid pellets, namely lower acetaldehyde content in the solid state polymerized product.

The three prepolymers are designated as 3-A, 3-B, and 3-C. Some of the pellet characteristics and some of the properties of these three prepolymers are compared in Table V. All of the three prepolymers had similar pellet weights. Prepolymer 3-A was in the form of solid pellets and the other two prepolymers were in the form of O-pellets. With the same polycondensation cycle time of 46 minutes, 3-A and 3-B prepolymers had similar I.V.'s (0.534 and 0.532 dl/g respectively) and similar acetaldehyde contents (85.2 and 87.4 ppm respectively). With a shorter polycondensation cycle time (36 minutes), 3-C prepolymer had a lower I.V. (0.482 dl/g) and a lower acetaldehyde content (49.0 ppm). The considerably lower acetaldehyde content of Prepolymer 3-C can be explained as follows. It is known that most of the acetaldehyde content in the prepolymer is generated during the polycondensation step when the reactor temperature and the melt viscosity are relatively high. Since high temperature promotes acetaldehyde generation and high melt viscosity impedes acetaldehyde removal from the prepolymer melt and a higher prepolymer I.V. requires a longer polycondensation cycle time, the acetaldehyde content of the resulting prepolymer pellets increases rapidly with increasing I.V..

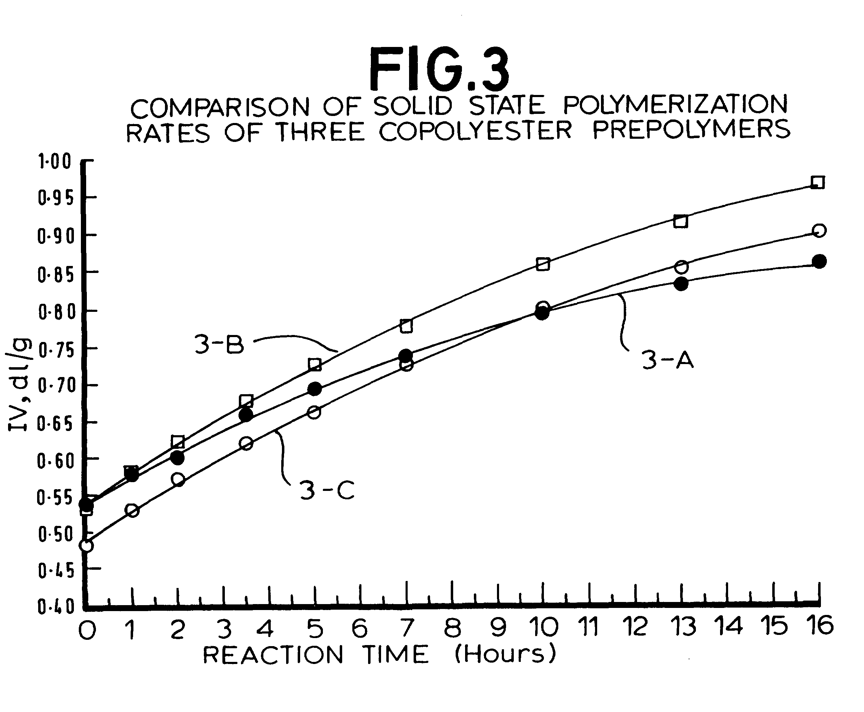

The solid state polymerisation rates of the three prepolymers are compared in Figure 3. It can be seen that the standard prepolymer, 3-A, attained an I.V. of 0.80 dl/g in 10.5 hours of SSP. Note that 0.80 dl/g is the required I.V. for this copolyester for bottle application. Another SSP run with 10.5 hour reaction time was conducted for each of these three prepolymers to provide samples for testings for SSP product acetaldehyde contents. The I.V.'s and acetaldehyde contents of these SSP products are included in Table V.

**Table V**

| Pellet Characteristics, I.V.'s and Acetaldehyde Contents of Three Copolyester Prepolymers before and after SSP* | | | |
|---|---|---|---|
| Copolyester prepolymer | 3-A | 3-B | 3-C |
| Polycondensation cycle time, min | 46 | 46 | 36 |
| Pellet Type | Solid pellet | O-Pellet | O-Pellet |
| Pellet wt,gm | 0.0161 | 0.0163 | 0.0162 |
| I.V. before SSP, dl/g | 0.534 | 0.532 | 0.482 |
| Acetaldehyde content before SSP, ppm | 85.2 | 87.4 | 49.0 |
| I.V. after SSP, dl/g | 0.80 | 0.87 | 0.81 |
| Acetaldehyde content after SSP, ppm | 1.4 | 1.1 | 0.8 |

| | | | |
|---|---|---|---|
| * Note: Solid state polymerisation for 10.5 hours at 220°C | | | |

The SSP product of 3-B had an I.V. and an acetaldehyde content of 0.87 dl/g and 1.1 ppm respectively as compared with 0.80 dl/g and 1.4 ppm respectively for the SSP product of 3-A, although both prepolymers had virtually equal initial I.V.'s and acetaldehyde contents. This indicates that it is possible to significantly increase the SSP product I.V. and reduce the SSP product acetaldehyde content simply by introducing a cavity through each of the prepolymer pellets.

The SSP product of 3-C had an I.V. approximately equal to that of the SSP product of 3-A, indicating that it is also possible to use a prepolymer with a desirable lower I.V. without sacrificing the SSP productivity simply by introducing a cavity through each of the prepolymer pellets. Since a lower prepolymer I.V. requires a shorter polycondensation cycle time, this also means that the productivity of the melt polymerisation process used to produce the prepolymer is increased. More surprisingly, the acetaldehyde content (0.8 ppm) of the SSP product of 3-C was much lower than that of the SSP product of 3-A (1.4 ppm). This can be attributed to the lower prepolymer aceltaldehyde content as well as the lower diffusion resistance of the prepolymer pellets of 3-C. The very low SSP product acetaldehyde content (below 1.0 ppm) achievable by using a lower prepolymer I.V. in combination with a pellet shape with low diffusion resistance will make the SSP product well suited for applications that require stringent acetaldehyde content limits (eg, polyester bottles for mineral water), add value to the product, and creates new applications. This advantage is in addition to the increased melt polymerisation process productivity explained above. It should be noted that, heretofore, no comparable conventional manufacturing process has been able economically to produce polyester bottle resin with an acetaldehyde content lower than 1.0 ppm.

Prepolymer open-ended pellets thus offer the following advantages over standard prepolymer pellets:

Pellets with open-ended cavities solid state polymerize much faster than standard pellets. Therefore, with an existing SSP plant, greater productivity can be achieved by using open-ended pellets. In a new plant a smaller SSP reactor is required for equal productivity. In both cases, the production costs are lower.

Even if I.V. is uniform throughout each prepolymer pellet before SSP, it will vary within the pellet after SSP. This is because of diffusional differences of by-products from within the pellet. As a result, the I.V. will be highest at the surface and lowest at the centre of a solid pellet. Since the maximum by-product diffusion path length can be more than halved by introducing a cavity in the pellet, such pellets have a much narrower I.V. distribution than standard pellets. Narrower I.V. distribution offers better polymer properties and processability. This is especially important in extrusion-blow molding.

Because of the higher SSP rates of open-ended pellets, the capability of an existing SSP process can be enhanced. For example, in a continuous SSP reactor with a residence time of 10 hours, the highest achievable product I.V. is, as shown in Figure 1, about 0.88 dl/g with standard PET prepolymer pellets; sufficient for bottle application but insufficient for food tray application. If Q-Pellets or C-Pellets are used, products with I.V.'s exceeding 0.95 dl/g are obtained; sufficient for bottle and food tray applications. The use of open-ended pellets enables an existing SSP process to produce higher molecular weight products for more demanding applications.

Use of open-ended pellets can also enable the lowering of prepolymer I.V. while maintaining the productivity and high product I.V. on an existing SSP line. Lower prepolymer I.V. leads to greater productivity for the melt process used to produce the prepolymer. Obviously, with open-ended pellets, not only higher molecular weight products can be produced with an existing SSP process, but the feed polymer I.V. can also be lowered.

Low acetaldehyde contents are desirable for bottle resins. By using open-ended pellets with lower I.V., products with lower acetaldehyde content can be obtained without sacrificing productivity.

## Claims

1. A polyester prepolymer pellet having improved gas diffusion characteristics that can be solid state polymerised into a high molecular weight polyester which comprises a polyester prepolymer formed into a substantially "C" shaped or tubular open-ended pellet.

2. A pellet as claimed in claim, 1, wherein the prepolymer as an intrinsic viscosity in the range of from 0.25 dl/g to 0.75 dl/g as measured in a 60:40 phenol: tetrachloroethane solvent system at a temperature of 30°C.

3. A pellet as claimed in claim 1 or claim 2, which is open at both ends and has an "O"-shaped cross-section.

4. A pellet as claimed in claim 1 or claim 2, which is open at both ends and open to the side, and has a "C"-shaped cross-section.

5. A pellet as claimed in claim 4, wherein the side opening Is narrower than one-fifth the pellet diameter.

6. A pellet as claimed in claim 4, wherein the side opening provides a gap of size in the range of from 0.01 to 10 mm.

7. A pellet as claimed in claim 6, wherein the gap size is in the range of from 0.1 to 0.4 mm.

8. A pellet as claimed in any one of claims 1 to 7, wherein the polyester is polymethylene terephthalate) or poly(ethylene naphthalate).

9. A process for the preparation of a pelletized polyester prepolymer by melt polymerisation followed by extrusion into pellets, characterised in that the polyester prepolymer is extruded through a die designed to form substantially "C" shaped or tubular molten strands, and the molten strands are quenched and then chopped into open-ended pellets of a size and shape suitable for solid state polymerisation.

10. The use of polyester prepolymer pellets as claimed in any one of claims 1 to 8, or as prepared by the process as claimed in claim 9, in the preparation of a polyester polymer by solid state polymerisation.

## Patentansprüche

1. Polyesterpräpolymerpellet mit verbesserten Gasdiffusionseigenschaften, das in fester Phase zu einem Polyester mit hohem Molekulargewicht polymerisiert werden kann, welches ein Polyesterpräpolymer umfaßt, das zu einem im wesentlichen "C"-förmigen oder rohrförmigen Pellet mit offenem Ende geformt ist.

2. Pellet nach Anspruch 1, worin das Präpolymer eine Intrinsic-Viskosität im Bereich von 0,25 dl/g bis 0,75 dl/g aufweist, gemessen in einem 60:40 Phenol:Tetrachlorethanlösungsmittelsystem bei einer Temperatur von 30°C.

3. Pellet nach Anspruch 1 oder 2, welches an beiden Enden offen ist und einen "O"-förmigen Querschnitt hat.

4. Pellet nach Anspruch 1 oder 2, welches an beiden Enden und an der Seite offen ist und einen "C"-förmigen Querschnitt hat.

5. Pellet nach Anspruch 4, worin die seitliche Öffnung enger als ein Fünftel des Pelletdurchmessers ist.

6. Pellet nach Anspruch 4, worin die seitliche Öffnung einen Spalt mit einer Größenordnung von 0,01 bis 10 mm ausbildet.

7. Pellet nach Anspurch 6, worin die Spaltgröße im Bereich von 0,1 bis 0,4 mm liegt.

8. Pellet nach einem der Ansprüche 1 bis 7, worin der Polyester Poly(ethylenterephthalat) oder Poly(ethylennaphthalat) ist.

9. Verfahren zur Herstellung eines pelletierten Polyesterpräpolymers durch Schmelzpolymerisation, gefolgt von einer Extrusion zu Pellets, dadurch gekennzeichnet, daß das Polyesterpräpolymer durch eine Formplatte extrudiert wird, die zur Ausbildung von im wesentlichen "C"-förmigen oder röhrenförmigen geschmolzenen Strängen konstruiert ist, und die geschmolzenen Stränge abgeschreckt und dann zu Pellets mit offenem Ende mit einer Größe und einer Form zerkleinert werden, die für die Festphasenpolymerisation geeignet ist.

10. Verwendung von Polyesterpräpolymerpellets nach einem der Ansprüche 1 bis 8, oder wie nach dem in Anspruch 9 beanspruchten Verfahren hergestellt, bei der Herstellung eines Polyesterpolymers durch Festphasenpolymerisation.

## Revendications

1. Pastille de prépolymère de polyester possédant des caractéristiques de diffusion de gaz améliorées, qui peut être polymérisée à l'état solide en un polyester de poids moléculaire élevé, qui comprend un prépolymère de polyester formé en une pastille sensiblement en forme de "C" ou tubulaire à extrémités ouvertes.

2. Pastille suivant la revendication 1, caractérisée en ce que le prépolymère possède une viscosité intrinsèque qui varie de 0,25 dl/g à 0,75 dl/g, comme mesuré dans un système solvant à base de phénol:tétra-chloréthane 60:40, à la température de 30°C.

3. Pastille suivant la revendication 1 ou la revendication 2, qui est ouverte aux deux extrémités et possède une section transversale en forme de "O".

4. Pastille suivant la revendication 1 ou la revendication 2, qui est ouverte aux deux extrémités et est ouverte sur le côté et possède une section transversale en forme de "C".

5. Pastille suivant la revendication 4, caractérisée en ce que l'ouverture latérale est plus étroite qu'un cinquième du diamètre de la pastille.

6. Pastille suivant la revendication 4, caractérisée en ce que l'ouverture latérale fournit un intervalle de calibre qui varie de 0,01 à 10 mm.

7. Pastille suivant la revendication 6, caractérisée en ce que le calibre de l'intervalle varie de 0,1 à 0,4 mm.

8. Pastille suivant l'une quelconque des revendications 1 à 7, caractérisée en ce que le polyester est le poly(téréphtalate d'éthylène) ou le poly(naphtalate d'éthylène).

9. Procédé de préparation de prépolymère de polyester en pastilles par polymérisation à l'état fondu suivie de l'extrusion en pastilles, caractérisé en ce que l'on extrude le prépolymère de polyester à travers une filière conçue pour former des brins fondus sensiblement en forme de "C" ou tubulaires et les brins fondus sont refroidis et ensuite hachés en pastilles à extrémités ouvertes d'un calibre et d'une forme convenant à la polymérisation à l'état solide.

10. Utilisation de pastilles de prépolymère de polyester suivant l'une quelconque des revendications 1 à 8, ou préparées par mise en oeuvre du procédé suivant la revendication 9, pour la préparation d'un polymère de polyester par polymérisation à l'état solide.
